# EUROPÄISCHE PATENTSCHRIFT

(11) **EP 1 878 523 B1**
(45) Veröffentlichungstag und Bekanntmachung des Hinweises auf die Patenterteilung: **14.04.2010**
(21) Anmeldenummer: 07012762.6
(22) Anmeldetag: 29.06.2007
(51) Int. Cl.: B23B 31/10, B23B 31/16

(54) **Spannfutter und Verfahren zur Herstellung eines Spannfutters**
Collet chuck and method for manufacturing a collet chuck
Mandrin et procédé de fabrication d'un mandrin

(30) Priorität: 13.07.2006 DE 102006033396
(43) Veröffentlichungstag der Anmeldung: 16.01.2008
(73) Patentinhaber: HAINBUCH GMBH SPANNENDE TECHNIK, D-71672 Marbach (DE)
(72) Erfinder: Weller, Hans-Michael, 71563 Affalterbach (DE)
(74) Vertreter: Patentanwälte Ruff, Wilhelm, Beier, Dauster & Partner

(56) Entgegenhaltungen:
- EP-A- 0 575 018
- DE-C- 612 878
- US-A- 2 513 284
- US-A- 3 610 644
- US-A- 5 292 139

## Beschreibung

Die Erfindung betrifft ein Spannfutter mit einem Futterkörper, der mit zumindest einer Führungseinrichtung versehen ist, an der zumindest ein bewegbarer Spannhalter zum Festlegen eines Werkstücks an dem Futterkörper aufgenommen ist, sowie ein Verfahren zur Herstellung eines Spannfutters. Insbesondere ist der Spannhalter in radialer Richtung bewegbar.

Es sind Spannfutter für die Verwendung an einer rotierenden Maschinenspindel bekannt, insbesondere an einer Maschinenspindel einer Drehmaschine, oder zur Festlegung an einem Maschinentisch, insbesondere an einem Maschinentisch einer Fräsmaschine oder eines Bearbeitungszentrums. Mit Hilfe des Spannfutters kann ein zu bearbeitendes Werkstück mit einer hohen Wiederholungsgenauigkeit präzise an der Maschinenspindel oder an dem Maschinentisch festgelegt werden. Nach Festlegung des Werkstücks kann ein spanender Bearbeitungsvorgang an dem Werkstück vorgenommen werden. Dabei werden am Werkstück auftretende Bearbeitungskräfte über das Spannfutter auf die Maschinenspindel oder den Maschinentisch übertragen. Zu diesem Zweck weist das bekannte Spannfutter einen Futterkörper auf, der typischerweise mit einer Schnittstelle zur kraftübertragenden Ankopplung an die Maschinenspindel oder den Maschinentisch versehen ist.

Um die Festlegung eines Werkstücks an dem Spannfutter vorzunehmen, ist zumindest ein bewegbar am Futterkörper aufgenommener Spannhalter vorgesehen. Der Spannhalter kann als Spannmittel zur unmittelbaren Kraftübertragung mit Berührkontakt zu dem zu bearbeitenden Werkstück oder als Spannmittelträger zur Aufnahme eines solchen Spannmittels ausgebildet sein. Für eine bewegliche Aufnahme des Spannhalters an dem Futterkörper ist zumindest eine Führungseinrichtung vorgesehen. Bei dem bekannten Spannfutter ist die Führungseinrichtung in den Futterkörper eingearbeitet und ermöglicht eine Relativbewegung zwischen Spannhalter und Futterkörper. Die Relativbewegung weist eine zumindest anteilig in radialer Richtung ausgerichtete Bewegungskomponente auf, vorzugsweise findet die Relativbewegung ausschließlich in radialer Richtung statt. Zudem ermöglicht die Führungseinrichtung eine Übertragung von Spannkräften, die zur Festlegung des Werkstücks an dem Spannfutter aufgebracht werden. Bei dem bekannten Spannfutter ist der Spannhalter in einer Radialrichtung linearbeweglich gegenüber dem zylindrisch ausgeführten Futterkörper angebracht.

Um eine exakte und wiederholgenaue Festlegung des Werkstücks an dem Futterkörper zu erreichen, muss eine präzise Führung des Spannhalters gewährleistet sein. Nur dann kommt bei jedem Spannvorgang das Werkstück in der gleichen Position zu liegen. Bei einer Verwendung des Spannmittels an einer Maschinenspindel einer Drehmaschine ist zudem eine präzise Ausrichtung des Werkstücks gegenüber einer Rotationsachse der Maschinenspindel zu gewährleisten. Ansonsten tritt bei einem Bearbeitungsvorgang auf der Drehmaschine ein unerwünschter Rundlauffehler auf. Es muss daher sichergestellt werden, dass der oder die Spannhalter exakt zu einer als Schnittstelle dienenden Bezugsgeometrie am Spannfutter ausgerichtet und positionierbar sind. Die Bezugsgeometrie ist für eine präzise Ausrichtung gegenüber der Maschinenspindel vorgesehen. Bei Spannfuttern für Drehmaschinen wird ein erheblicher Anteil der Herstellungskosten für das Spannfutter durch die Notwendigkeit zur präzisen Fertigung der Spannhalter und durch die Notwendigkeit zur präzisen Fertigung der Führungseinrichtungen relativ zur der Bezugsgeometrie hervorgerufen.

Die US 5,292,139 zeigt ein Dreibacken-Spannfutter mit Spannhaltern, die separat von einer Führungseinrichtung ausgebildet und daran befestigt sind. Die Befestigung erfolgt mittels Verschraubung. Ähnliches zeigen auch die US 2,513,284 sowie die DE 1096160, wobei die Spannhalter stets aus Metall bestehen und direkt an der ebenfalls aus Metall bestehenden Führungseinrichtung befestigt sind.

### Aufgabe und Lösung

Die Aufgabe der Erfindung besteht darin, ein Spannfutter sowie ein Verfahren zur Herstellung eines Spannfutters derart zu verbessern, dass eine vereinfachte Herstellung mit niedrigeren Herstellungskosten verwirklicht werden kann.

Gelöst wird diese Aufgabe durch ein Spannfutter mit den Merkmalen des Anspruchs 1 sowie durch ein Verfahren zur Herstellung eines Spannfutters mit den Merkmalen des Anspruchs 13. Vorteilhafte sowie bevorzugte Ausgestaltungen der Erfindung sind in den weiteren Ansprüchen angegeben und werden im Folgenden näher erläutert. Merkmale, die das Spannfutter und das Herstellungsverfahren beschreiben, werden im Folgenden teilweise nur einmal beschrieben. Sie sollen jedoch unabhängig davon sowohl für das Spannfutter als auch für das Herstellungsverfahren gelten. Der Wortlaut der Ansprüche wird durch ausdrückliche Bezugnahme zum Inhalt der Beschreibung gemacht.

Gemäß einem ersten grundsätzlichen Aspekt der Erfindung ist ein Spannfutter der eingangs genannten Art vorgesehen, bei dem die Führungseinrichtung separat vom Futterkörper ausgebildet ist und somit eine diskrete Komponente des Spannfutters darstellt. Dadurch können für den Futterkörper und für die Führungseinrichtung unterschiedliche Materialien und/oder Herstellungsverfahren gewählt werden, die spezifisch auf die Erfordernisse der jeweiligen Komponenten abgestimmt sind. Für die Führungseinrichtung kann vorzugsweise ein hochfestes Material ausgewählt werden, das eine zuverlässige Übertragung hoher Kräfte zwischen Werkstück und Futterkörper ermöglicht. Für den Futterkörper kann vorzugsweise ein leichteres und gegebenenfalls kostengünstigeres Material als für die Führungseinrichtung gewählt werden. Mit einem leichten Futterkörper können die Kräfte, die bei Verwendung des Spannfutters an einer bewegten Maschinenspindel durch Unwuchten sowie durch Beschleunigungs- und Abbremsvorgängen auftreten, gering gehalten werden. Zudem kann die Führungseinrichtung mit Herstellungs- und/oder Oberflächebearbeitungsschritten hergestellt werden, die aus technischen Überlegungen oder auch aus Kostengründen für den Futterkörper nicht anwendbar sind. Bei dem Futterkörper handelt es sich vorzugsweise um einen durch Dreh- und/oder Fräsbearbeitungsvorgänge hergestellten Körper aus Stahl oder Aluminium. Die Führungseinrichtung kann vorzugsweise durch Fräsen, Schmieden, Strangpressen, Metallgießen, Feingießen, Schleifen oder durch eine Kombination solcher Bearbeitungsvorgänge hergestellt werden. Als Material für die Führungseinrichtung können neben Stahl auch Titan oder andere hochfeste Legierungen eingesetzt werden, die für eine Herstellung des gesamten Futterkörpers aus Kostengründen nicht in Frage kommen würden. Die Führungseinrichtung kann auch mit einer Oberflächenbeschichtung versehen werden, um eine besonders belastbare Oberfläche zu erzeugen. Als Beschichtungsverfahren können beispielsweise Verchromen oder Nitrieren, insbesondere Beschichten mit Titannitrid, eingesetzt werden. Der Querschnitt der Führungseinrichtung sowie auch vor allem der Führung in den Spannhaltern ist beliebig, wobei hinterschnittene Querschnitte mit Schrägung oder Stufenform wie beispielsweise T-Form besonders vorteilhaft sind.

Bei der Erfindung ist vorgesehen, dass die Führungseinrichtung stoffschlüssig an dem Futterkörper festgelegt ist. Eine stoffschlüssige Festlegung kann insbesondere durch Schweißen, Löten, Kleben, Vergießen oder durch eine Kombination derartiger Fügevorgänge erzielt werden. Dabei kann ein unmittelbarer Kontakt zwischen dem Futterkörper und der Führungseinrichtung vorgesehen sein, wie dies beim Schweißen durch Verschmelzen der Materialien von Futterkörper und Führungseinrichtung verwirklicht wird. Bei einem Schweißvorgang mit der Verwendung von Zusatzwerkstoff oder beim Löten, Kleben oder Vergießen wird zwischen den Futterkörper und die Führungseinrichtung zumindest ein Zusatzwerkstoff eingebracht, der die beiden Teile miteinander verbindet. Die Verwendung eines Zusatzwerkstoffs ermöglicht den Ausgleich von Formabweichungen zwischen Führungsmittel und Futterkörper. Derartige Formabweichungen werden als Form- und Lagetoleranzen für die Herstellung der Führungsmittel und des Futterkörpers vorgegeben und beeinflussen die Herstellungskosten maßgeblich. Zudem können durch den Zusatzwerkstoff auch unterschiedliche Materialien, die beispielsweise nicht miteinander verschweißbar sind, durch die anderen, oben genannten Fügeverfahren fest miteinander verbunden werden. Dabei kann der Zusatzwerkstoff neben der Verbindung der Teile auch als Dämpfungsschicht und/oder als elastische Schicht dienen, um Kraftspitzen zu bedämpfen und die Übertragung von Schwingungen zwischen den verbundenen Komponenten zu reduzieren.

In weiterer Ausgestaltung der Erfindung ist vorgesehen, dass ein Zwischenraum, der zumindest im wesentlichen von der Führungseinrichtung und einer im Futterkörper vorgesehenen Ausnehmung begrenzt ist, zumindest teilweise mit einem aushärtbaren Füllwerkstoff, insbesondere mit Polymerbeton, ausgefüllt ist. Der Zwischenraum ist vorzugsweise derart bemessen, dass die den Zwischenraum begrenzenden Geometrien des Futterkörpers und der Führungseinrichtung grobe Toleranzen aufweisen können, so dass diese Geometrien kostengünstig hergestellt werden können. Selbst bei ungünstiger Toleranzkombination für die Geometrien steht somit noch ein ausreichendes Volumen für den aushärtbaren Füllwerkstoff zur Verfügung. Als Füllwerkstoff können insbesondere zeitweilig fließfähige Gemische eingesetzt werden, die beispielsweise einen Binder und einen Härter aufweisen und die durch Aktivierung des Binders durch den Härter nach einer vorbestimmbaren Zeit aushärten. Bei einer bevorzugten Ausführungsform der Erfindung ist vorgesehen, als Füllwerkstoff Polymerbeton einzusetzen. Polymerbeton bzw. Mineralguss ist ein Werkstoff, der aus mineralischen Füllstoffen wie Granit, Basalt, Kreide, Quarzkies, Quarzsand oder Gesteinsmehl in jeweils unterschiedlichen Körnungen und mit einem geringen Anteil von Reaktionsharzen wie Epoxidharz oder sonstigem Binder besteht. Das Material wird gemischt und als homogene Masse kalt in eine Form vergossen. Polymerbeton zeichnet sich gegenüber anderen Werkstoffen wie beispielsweise Kunststoffen dadurch aus, dass er ein besonders geringes und somit vorteilhaftes Schwundverhalten beim Aushärten aufweist. Die Dichte von Polymerbeton ist deutlich geringer als die von üblichen, bei der Herstellung von Spannfuttern verwendeten Werkstoffen, insbesondere Metallen. Somit handelt es sich um einen nichtmetallischen Werkstoff, dessen Eigenschaften im Hinblick auf Dichte, Elastizität und Dämpfung in einem breiten Spektrum eingestellt werden können. Der Polymerbeton kann, wie andere für das Spannfutter verwendbare Füllwerkstoffe, mit künstlichen und/oder natürlichen Fasern gefüllt werden, um eine verbesserte Belastbarkeit, insbesondere auch gegenüber Zugkräften, zu erzielen.

In weiterer Ausgestaltung der Erfindung ist vorgesehen, dass die Führungseinrichtung und die Ausnehmung im Futterkörper derart aufeinander abgestimmt sind, dass der Füllwerkstoff bei der Festlegung eines Werkstücks zumindest überwiegend mit Druckkraft bzw. Druckspannungen beaufschlagt ist. Der Füllwerkstoff weist typischerweise eine erheblich höhere Druckbelastbarkeit verglichen mit einer Zugbelastbarkeit auf. Eine geeignete Abstimmung von Futterkörper und Führungseinrichtung ermöglicht somit die volle Ausnutzung der positiven Eigenschaften des Füllwerkstoffs.

In weiterer Ausgestaltung der Erfindung ist vorgesehen, dass die Ausnehmung und die Führungseinrichtung aufeinander abgestimmte Vorsprünge aufweisen, die für eine Übertragung von Druckkräften zwischen Futterkörper und Führungseinrichtung über den Füllwerkstoff ausgebildet sind. Durch die Vorsprünge an der Führungseinrichtung und am Futterkörper kann vorzugsweise eine hinterschnittene Geometrie ausgebildet werden. Über die Vorsprünge können die beim Spannen eines Werkstücks auftretenden Kräfte zumindest überwiegend als Druckspannungen in den Füllwerkstoff eingeleitet werden. Somit wird der Füllwerkstoff vorteilhaft belastet und es kann eine kompakte Gestaltung der Schnittstelle zwischen Führungseinrichtung und Futterkörper verwirklicht werden.

In weiterer Ausgestaltung der Erfindung ist vorgesehen, dass die Ausnehmung eine Profilierung mit einem zumindest im wesentlichen konstanten Querschnitt aufweist, wobei eine Profilachse zumindest im wesentlichen in radialer Richtung ausgerichtet ist. Die zur Aufnahme der Führungseinrichtung vorgesehene Ausnehmung kann vorzugsweise durch einen Fräsvorgang in den Futterkörper eingebracht werden. Eine Herstellung eines Hinterschnitts kann durch Verwendung eines Formfräsers, der beispielsweise einen T-förmigen Querschnitt aufweist, kostengünstig durchgeführt werden. Da der Formfräser in einfacher Weise die Herstellung eines Profils mit einem konstanten Querschnitt ermöglicht, kann hierdurch eine kostengünstige Herstellung der Ausnehmung gewährleistet werden. Eine Profilachse des Profils beschreibt diejenige Raumrichtung, in der das Profil einen konstanten Querschnitt aufweist. Diese Profilachse ist vorzugsweise in radialer Richtung bezogen auf den im wesentlichen zylindrisch geformten Futterkörper bzw. bezogen auf eine Rotationsachse des Futterkörpers bei Anbringung an einer Maschinenspindel ausgerichtet. Damit kann die zumindest eine Führungseinrichtung bei der Herstellung des Spannfutters beispielsweise in radialer Richtung nach innen in den Futterkörper eingeschoben werden, um dort anschließend durch das Füllmaterial stoffschlüssig festgelegt zu werden.

In weiterer Ausgestaltung der Erfindung ist vorgesehen, dass die Führungseinrichtung und der Spannhalter zumindest einen, vorzugsweise parallel zu einer Radialrichtung erstreckten, Führungsbereich begrenzen, der für die Aufnahme zumindest eines Führungsmittels ausgebildet ist. Bei einer bevorzugten Ausführungsform der Erfindung ist der Führungsbereich parallel zu einer Radialrichtung des Futterkörpers ausgerichtet und ermöglicht somit eine lineare Verstellung des Spannhalters in der Radialrichtung.

Der Führungsbereich ist vorteilhaft für die Aufnahme eines Lagermittels vorgesehen. Das Lagermittel kann eine an der Führungseinrichtung oder dem Spannhalter festlegbare Gleitschiene sein. Das Lagermittel kann auch relativbeweglich zwischen Führungseinrichtung und Spannhalter aufgenommene Lagerkörper bzw. Wälzkörper aufweisen, insbesondere Lagerkugeln oder Lagernadeln. Das Lagermittel stellt eine reibungsarme, kraftübertragende, bewegliche Verbindung zwischen dem Spannhalter und der Führungseinrichtung sicher. Vorteilhaft kann der Spannhalter mittels einer Wälzführung in der Führungseinrichtung bzw. den Führungsteilen der Führungseinrichtung gelagert sein, wobei vorzugsweise die vorgenannten Lagermittel bzw. Wälzkörper der Wälzführung Zylinderrollen sind, alternativ auch Kugeln oder Nadeln. Dabei können die Wälzkörper eine Wälzführung bilden, so dass der Spannhalter ausschließlich entlang einer Längsrichtung der Wälzführung bewegbar ist.

Die Führungsflächen für die Wälzkörper können schräg stehen zu einer Mittelachse des Spannfutters um eine sichere Halterung des Spannhalters zu gewährleisten. Besonders vorteilhaft sind derartige Führungsflächen an den Führungsteilen vorgesehen.

In weiterer Ausgestaltung der Erfindung ist vorgesehen, dass die Führungseinrichtung aus zumindest zwei, vorzugsweise zumindest im wesentlichen gleichartig geformten, Führungsteilen gebildet ist. Dies ermöglicht eine kostengünstige und präzise Fertigung der Führungseinrichtung. Dabei kann vorgesehen sein, die Führungsteile als Abschnitte eines durch Walzen, Stranggießen oder Strangpressen hergestellten Profils auszuführen. Eine Fertigbearbeitung der Abschnitte kann dann insbesondere durch Längsschleifen erfolgen, wodurch sich eine hohe Oberflächenqualität erzielen lässt. Die zumindest zwei Führungsteile werden anschließend miteinander verbunden und bilden somit die Führungseinrichtung. Bei einer bevorzugten Ausführungsform der Erfindung sind die Führungsteile spiegelbildlich zu einer Symmetrieebene, insbesondere spiegelbildlich zu einer Radialebene des Futterkörpers, ausgebildet und/oder angeordnet.

In weiterer Ausgestaltung der Erfindung ist vorgesehen, dass die Führungsteile durch Verbindungsmittel zumindest beim Einsetzen bzw. während des Vergusses miteinander gekoppelt sind, eventuell auch noch danach bzw. dauerhaft. Als Verbindungsmittel können insbesondere Verschraubungen eingesetzt werden. Verschraubungen gewährleisten eine einfach zu montierende und hoch belastbare Verbindung der Führungsteile. Die Führungsteile können alternativ oder ergänzend mit präzise ausgeführten und platzierten Positionsbohrungen versehen sein, die für die Aufnahme von Paßstiften vorgesehen sind, um eine besonders exakte Ausrichtung der einander gegenüberliegend angeordneten Führungsteile zu ermöglichen. Die Verbindungsmittel dienen in erster Linie zur Fixierung der Führungsteile, bis der Verguss des Führungsmittels im Futterkörper vorgenommen wurde. Nach erfolgtem Verguss dienen die Verbindungsmittel zum Abfangen innerer Spannungen an den miteinander verbundenen Führungsteilen, wie sie durch die eingeleiteten Spannkräfte auftreten können. Es ist auch möglich, die Verbindungsmittel nach dem Verguss zu entfernen.

In weiterer Ausgestaltung der Erfindung ist vorgesehen, dass der Spannhalter zum Festlegen eines Werkstücks mit einer Betätigungseinrichtung gekoppelt ist, die für eine Einleitung von radial nach innen gerichteten Betätigungskräften auf den Spannhalter ausgebildet ist. Die Betätigungseinrichtung ermöglicht das Festlegen des Werkstücks an dem Spannfutter, indem die zur Festlegung notwendigen Kräfte von der Betätigungseinrichtung, vorzugsweise synchron, auf die Spannhalter eingeleitet werden.

In weiterer Ausgestaltung der Erfindung ist vorgesehen, dass die Betätigungseinrichtung für eine Ansteuerung des Spannhalters mittels eines vorzugsweise parallel zu einer Maschinenspindelachse verstellbaren Betätigungsglieds, insbesondere eines Keilhakengetriebes, ausgebildet ist. Damit kann in einfacher Weise das bei einer Maschinenspindel üblicherweise vorhandene Betätigungsglied eingesetzt werden, um die für die Festlegung des Werkstücks notwendige Spannkraft aufzubringen. Das Betätigungsglied wird üblicherweise längs der Rotationsachse der Maschinenspindel von einem der Werkzeugmaschine zugeordneten Arbeitszylinder translatorisch bewegt. Eine Umsetzung der translatorischen Bewegung längs der Rotationsachse in eine translatorische Bewegung der Spannhalter in radialer Richtung und somit orthogonal zur Rotationsachse kann vorzugsweise mit einem Keilhakengetriebe verwirklicht werden. Dabei werden korrespondierende schiefe Ebenen des Keilhakengetriebes und der Spannhalter derart linear gegeneinander verschoben, dass eine Bewegungsumlenkung um 90 Grad erfolgt und sich die Spannhalter in radialer Richtung bewegen.

Gemäß einem weiteren grundsätzlichen Aspekt der Erfindung weist ein Verfahren zur Herstellung eines Spannfutters die Schritte auf Aufnehmen von Führungsteilen an einem Ausrichtmittel, Anbringen und Festlegen des Ausrichtmittels am dem Futterkörper unter Verwendung zumindest einer am Futterkörper vorgesehenen, zum Ausrichtmittel korrespondierenden Ausrichtgeometrie, Einsetzen der Führungsteile in Ausnehmungen des Futterkörpers und stoffschlüssiges Verbinden der Führungsteile mit dem Futterkörper.

Dabei können diese Verfahrensschritte in unterschiedlicher Reihenfolge durchgeführt werden, so dass eine Anpassung des Verfahrens an unterschiedliche Rahmenbedingungen vorgenommen werden kann. Ein bevorzugter Verfahrensablauf sieht vor, zunächst die Führungseinrichtungen in radialer Richtung nach innen in die radial ausgerichteten Ausnehmungen des Futterkörpers einzuschieben. Ein Einsetzen in axialer Richtung wird durch die Vorsprünge an den Führungseinrichtungen und an den Ausnehmungen verhindert. Anschließend wird die Ausrichtvorrichtung relativ zum Futterkörper ausgerichtet und festgelegt. Dazu kann insbesondere ein ohnehin am Futterkörper vorhandenes Mittenloch, also eine zentrische Bohrung im Futterkörper, als Ausrichtgeometrie benutzt werden. Die Ausrichtvorrichtung- weist Ausleger auf, die auf die Position der Ausnehmungen und die Gestalt der Führungseinrichtungen abgestimmt sind und an denen die Führungseinrichtungen angebracht werden. Damit ist eine vorgegebene Positionierung der Führungseinrichtungen gegenüber dem Futterkörper erreicht. Gemäß einer vorteilhaften Verfahrensweise werden anschließend die Zwischenräume zwischen den Führungseinrichtungen und dem Futterkörper mit dem Füllmaterial ausgefüllt und das Füllmaterial wird ausgehärtet. Zum Füllen der Zwischenräume wird bevorzugt ein zähflüssiger oder pastöser Füllwerkstoff eingesetzt, um zu verhindern, dass sich das Füllmaterial in unerwünschter Weise im Futterkörper verteilt. Diese sind eingangs beispielhaft genannt. Die Ausrichtvorrichtung wird nach dem Aushärten des Füllmaterials entfernt und die Führungseinrichtungen sind stoffschlüssig an dem Futterkörper aufgenommen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein können und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:

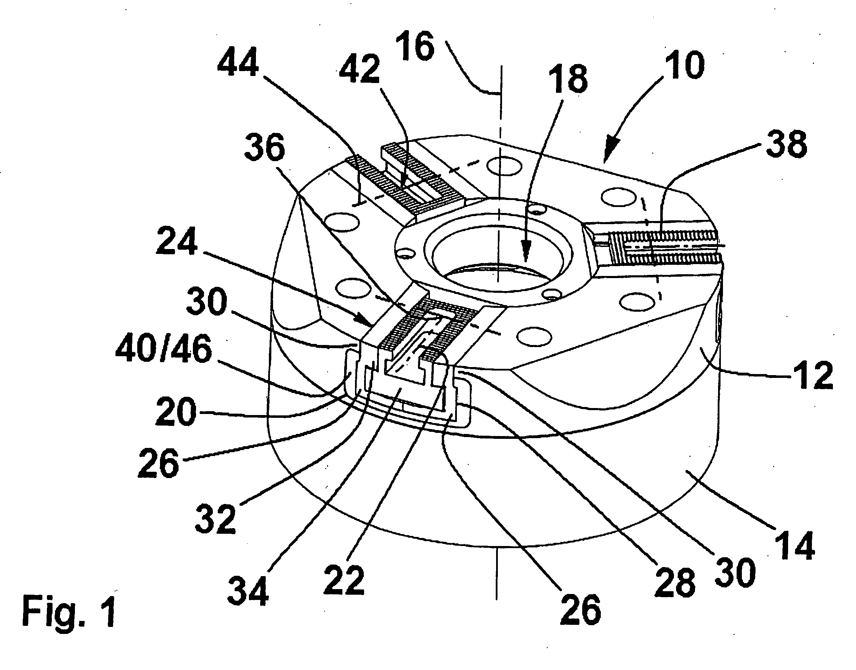

- Fig. 1: eine perspektivische Darstellung eines Spannfutters mit drei in gleicher Winkelteilung vorgesehenen Führungseinrichtungen,
- Fig. 2: eine teilweise geschnittene Ausschnittvergrößerung des Spannfutters gemäß der Fig. 1,

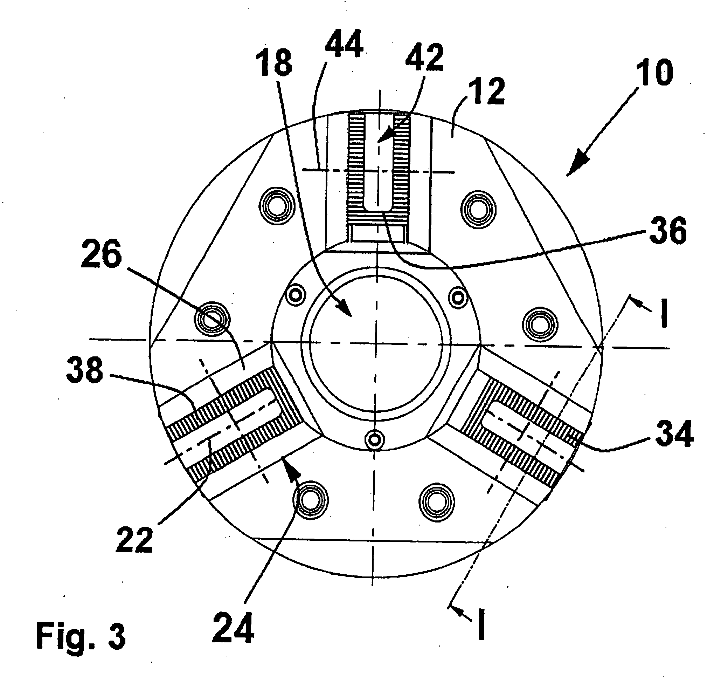

- Fig. 3: eine Draufsicht auf ein Spannfutter ähnlich Fig. 1 und 2,
- Fig. 4: eine seitliche Schnittdarstellung gemäß dem in Fig. 3 eingezeichneten Schnittverlauf I-I und
- Fig. 5: eine Abwandlung eines Spannfutters in Ansicht entsprechend Fig. 4 mit einer Wälzführung.

### Detaillierte Beschreibung der Zeichnungen

Ein Spannfutter 10 weist einen Futterkörper 12 sowie einen Kupplungskörper 14 auf. Der Futterkörper 12 und der Kupplungskörper 14 sind jeweils im wesentlichen zylindrisch geformt und sind koaxial zu einer gemeinsamen Mittelachse 16 angeordnet. Der Futterkörper 12 und der Kupplungskörper 14 sind mit als Durchgangsbohrungen ausgeführten Mittenbohrungen 18 versehen, die koaxial zur Mittelachse 16 ausgerichtet sind. Der Kupplungskörper 14 weist an einer nicht dargestellten, dem Futterkörper 12 abgewandten Stirnseite eine Kupplungsgeometrie auf, die für eine zentrierte Anbringung an einer nicht dargestellten Maschinenspindel einer Drehmaschine dienen kann.

In dem Futterkörper 12 sind drei mit einer auf die auf die Mittelachse 16 bezogenen Winkelteilung von 120 Grad angebrachte T-förmig profilierte Ausnehmungen 20 vorgesehen. Profilachsen 22, die sich in Richtung eines konstanten Profilquerschnitts der Ausnehmungen 20 erstrecken, sind in radialer Richtung zum Futterkörper 12 ausgerichtet. In den Ausnehmungen 20 sind jeweils Führungseinrichtungen 24 stoffschlüssig festgelegt. Die Führungseinrichtungen 24 weisen jeweils zwei spiegelbildlich zur Profilachse 22 angeordnete, im wesentlichen gleichartig geformte Führungsteile 26 auf, die bezogen auf die Profilachse 22 einen konstanten Querschnitt aufweisen. In einem Zwischenraum 40 zwischen der Ausnehmung 20 und der Führungseinrichtung 24 ist Polymerbeton 46 als Füllmaterial eingebracht.

Die Führungseinrichtungen 24 weisen eine Außenoberfläche und eine Innenoberfläche mit einem jeweils T-förmigen Querschnitt auf. Dieser Querschnitt kann, wie eingangs angesprochen, auch anders als T-förmig sein. Die Außenoberfläche hat einen auf die Ausnehmung 20 angepaßten Querschnitt, der abschnittsweise breiter als ein minimaler Querschnitt der Ausnehmung 20 ist. Beidseitig an der Führungseinrichtung 24 ausgebildete Vorsprünge 28 können somit Druckkräfte über den Polymerbeton 46 auf die Vorsprünge 30 der Ausnehmung 20 übertragen. Dabei bilden die Vorsprünge 30 der Ausnehmung 20 jeweils Hinterschnitte. Die Profilierung der Innenoberflächen der Führungsteile 26 bildet durch nach innen ragende Vorsprünge 32 ebenfalls Hinterschneidungen, die für eine formschlüssige und schiebebewegliche Aufnahme der Spannhalter 34 ausgebildet sind.

Die in Richtung der Profilachse 22 T-förmig profilierten Spannhalter 34 sind stirnseitig mit einer Abschlussfläche 36 versehen, die als Anschlag für nicht dargestellte, in die T-förmige Nut 42 der Spannhalter 34 aufnehmbare Nutensteine vorgesehen sind. Die Nutensteine dienen zur Festlegung von ebenfalls nicht dargestellten Spannmitteln, die auf der mit einer Verzahnung 38 versehenen Oberseite der Spannhalter 34 aufgesetzt werden können und die für einen Berührkontakt und eine Kraftübertragung mit einem nicht dargestellten Werkstück vorgesehen sind.

Die Spannhalter 34 können beispielsweise durch ein im Kupplungskörper integriertes, nicht dargestelltes Keilhakengetriebe mit radial nach innen oder nach außen gerichteten Spannkräften beaufschlagt werden, um das Werkstück zu spannen. Auch Hebelgetriebe oder Keilstangengetriebe können allgemein eingesetzt werden. Die durch die Spannkräfte hervorgerufenen Reaktionskräfte auf die Spannhalter 34 führen zu einem Kippmoment um eine orthogonal zur Mittelachse 16 und orthogonal zur Profilachse 22 ausgerichtete Kippachse 44. Zudem werden die Spannhalter 34 mit radial nach außen wirkenden Schubkräften beaufschlagt, die von den Spannmitteln übertragen werden. Die Schubkräfte werden direkt auf das Keilhakengetriebe übertragen und spielen daher für die Kraftübertragung zwischen Spannhalter 34, Führungseinrichtung 24, Polymerbeton 46 und Futterkörper 12 keine maßgebliche Rolle. Die durch das Kippmoment um die Kippachse 44 auf die Spannhalter 34 übertragenen Kräfte müssen hingegen über die Führungseinrichtung und den Polymerbeton in den Futterkörper 12 eingeleitet werden. Das Kippmoment führt in einem radial außenliegenden Bereich der Führungseinrichtung 24 zu einer in axialer Richtung auf den Kupplungskörper 14 weisenden Druckkraft 48. Diese Druckkraft 48 wird von der Führungseinrichtung 24 über den Polymerbeton 46 in den Futterkörper 12 eingeleitet.

In einem radial innenliegenden Bereich der Führungseinrichtung 24 tritt hingegen eine vom Kippmoment bewirkte Druckkraft 50 in axialer Richtung auf, die vom Kupplungskörper 14 wegweist. Diese Druckkraft 50 wird über die Vorsprünge 28 der Führungsteile 26 über den Polymerbeton 46 auf die Vorsprünge 30 des Futterkörpers 12 übertragen. Somit ist gewährleistet, dass der Polymerbeton 46 im wesentlichen nur mit Druckkräften beaufschlagt wird, so dass auch hohe Kippmomente in den Futterkörper 12 abgeleitet werden können.

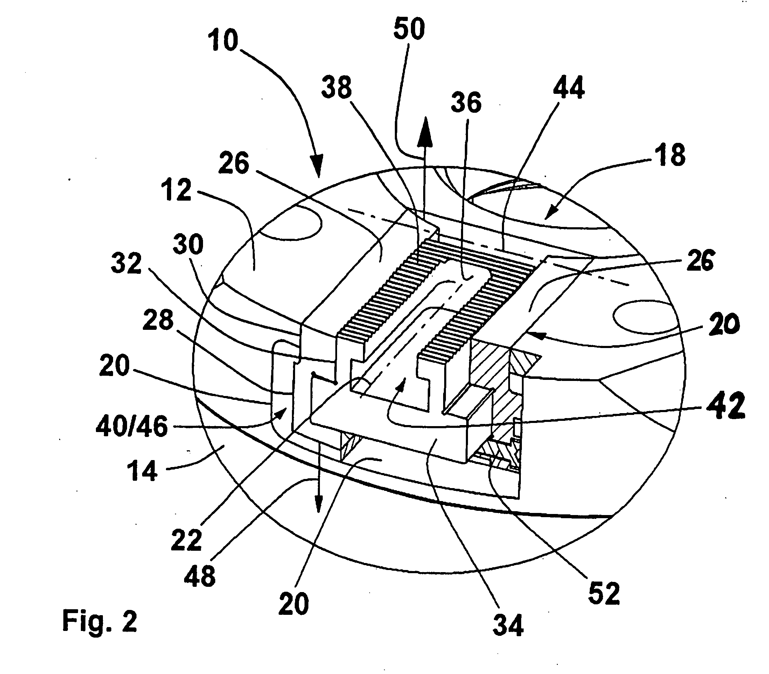

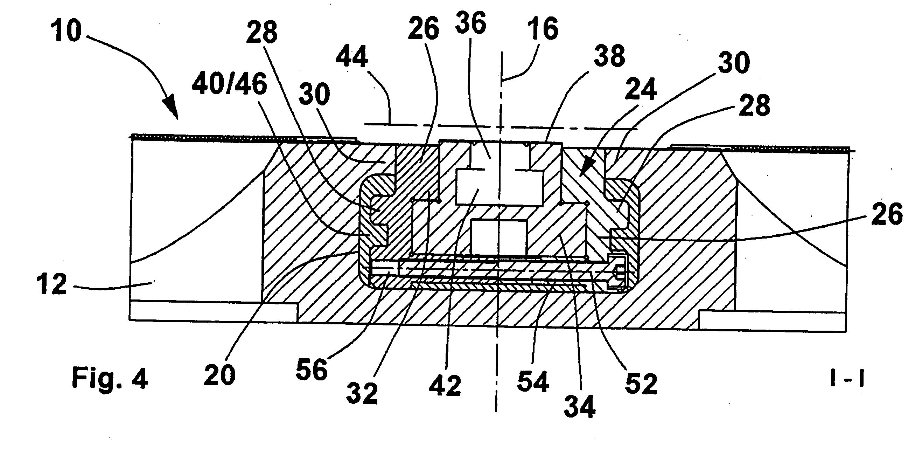

Wie in den Darstellungen der Fig. 2 und 4 näher gezeigt, sind die Führungseinrichtungen 24 als Gleitführung für die Spannhalter 34 ausgeführt, wobei die T-förmigen Nuten in den Führungseinrichtungen 24 auf die T-förmige Außenkontur der Spannhalter 34 abgestimmt sind. Der Führungsbereich beschränkt sich bei diesem Ausführungsbeispiel der Erfindung somit auf einen für die Gleitbewegung zwischen Spannhalter 34 und Führungseinrichtung 24 notwendigen Gleitspalt. Die Führungsteile 26 sind durch als Spannschrauben 52 ausgeführte Verbindungsmittel miteinander verbunden. Dabei wird die Spannschraube durch eine Durchgangsbohrung 54 im ersten Führungsteil 26 geführt und greift in eine Gewindebohrung 56 im zweiten Führungsteil 26 ein. In radialer Richtung innenliegend ist eine zweite, nicht dargestellte Spannschraube vorgesehen, die durch eine im zweiten Führungsteil 26 vorgesehene Durchgangsbohrung in eine Gewindebohrung im ersten Führungsteil 26 eingreift. Durch eine derartige Anordnung der Spannschrauben können die Führungsteile 26 als Gleichteile ausgeführt werden, die spiegelbildlich zu einer die Profilachse 22 umfassenden Symmetrieebene in radialer Richtung angeordnet werden.

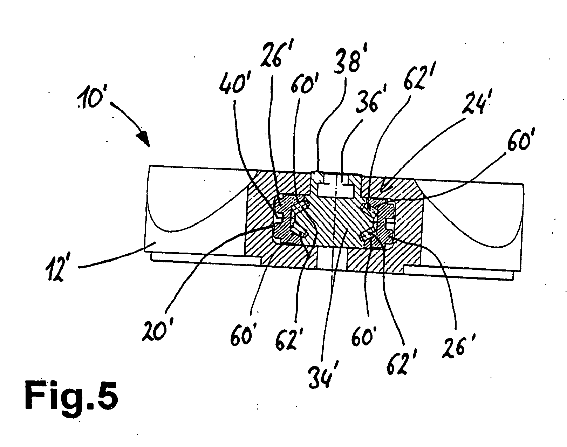

In Fig. 5 ist eine Abwandlung eines Spannfutters 10' dargestellt. Dort ist wiederum eine Führungseinrichtung 24' in einer Ausnehmung 20' des Futterkörpers 12' angeordnet und befestigt, insbesondere über Einbringen von Polymerbeton in den Zwischenraum 40'. Der Spannhalter 34' weist in den Bereichen der Vorsprünge 32 gemäß Fig. 4 Zylinderrollen 62' als Wälzkörper auf, die an dem Spannhalter 34' befestigt sind. Entsprechend sind an der Innenseite der Führungsteile 26' Schrägflächen 60' als Führungsflächen für die Wälzkörper 62' vorgesehen. Durch das Vorsehen der Wälzkörper 62' allgemein und der schrägen Anordnung im Besonderen ist sowohl eine leicht gängige Führung als auch das Auffangen von Kräften entlang der Mittelachse 60' und in der normalen Ebene dazu möglich. Der Vorteil der Wälzführung liegt vor allem in der geringeren Reibung sowie einem auf Dauer verschleißfesten Betrieb. Anstelle der dargestellten zylinderartigen Wälzkörper 62' könnten natürlich auch andere Wälzkörper verwendet werden, beispielsweise Kugeln. Der Vorteil der Befestigung der Wälzkörper 62' an dem herausnehmbaren Spannhalter 34' liegt ganz klar in der leichteren Wartung und Austauschbarkeit. Die genaue Art der Befestigung bzw. der Anordnung der Wälzkörper 62' stellt für den Fachmann kein Problem dar, wobei er dazu auf bekannte Lösungen des Standes der Technik zurückgreifen kann. Neben einer solchen seitlichen Wälzführung könnte auch noch eine Wälzführung an der Unterseite des Spannhalters 34' vorgesehen sein.

## Patentansprüche

1. Spannfutter (10) mit einem Futterkörper (12), der mit zumindest einer Führungseinrichtung (24) versehen ist, an der zumindest ein in vorzugsweise radialer Richtung bewegbarer Spannhalter (34) zum Festlegen eines Werkstücks an dem Futterkörper (12) aufgenommen ist, **dadurch gekennzeichnet, dass** die Führungseinrichtung (24) separat von dem Futterkörper (21) ausgebildet ist, **dadurch gekennzeichnet, dass** die Führungseinrichtung (24) stoffschlüssig an dem Futterkörper (12) festgelegt ist mittels eines Füllwerkstoffs (46), der von dem Futterkörper (12) verschieden ist.

2. Spannfutter nach Anspruch 1, **dadurch gekennzeichnet, dass** ein Zwischenraum (40), der zumindest im wesentlichen von der Führungseinrichtung (24) und einer im Futterkörper (12) vorgesehenen Ausnehmung (20) begrenzt ist, zumindest teilweise mit einem aushärtbaren Füllwerkstoff (46), insbesondere mit Polymerbeton bzw. Mineralguss, ausgefüllt ist.

3. Spannfutter nach Anspruch 2, **dadurch gekennzeichnet, dass** die Führungseinrichtung (24) und die Ausnehmung (20) im Futterkörper (12) derart aufeinander abgestimmt sind, dass der Füllwerkstoff (46) bei der Festlegung eines Werkstücks zumindest überwiegend mit Druckkraft beaufschlagt ist.

4. Spannfutter nach Anspruch 2 oder 3, **dadurch gekennzeichnet, dass** die Ausnehmung (20) und die Führungseinrichtung (24) aufeinander abgestimmte Vorsprünge (28, 30) und/oder Ausnehmungen aufweisen, die für eine Übertragung von Druckkräften zwischen Futterkörper (12) und Führungseinrichtung (24) über den Füllwerkstoff (46) ausgebildet sind.

5. Spannfutter nach einem der Ansprüche 2 bis 4, **dadurch gekennzeichnet, dass** die Ausnehmung (20) eine Profilierung mit einem in Längsrichtung zumindest im wesentlichen konstanten Querschnitt aufweist, insbesondere hinterschnitten ist, wobei vorzugsweise eine Profilachse (22) zumindest im wesentlichen in radialer Richtung des Spannfutters (10) ausgerichtet ist.

6. Spannfutter nach einem der vorhergehenden Ansprüche, **dadurch gekennzeichnet, dass** die Führungseinrichtung (24) und der Spannhalter (34) zumindest einen, vorzugsweise parallel zu einer Radialrichtung erstreckten, Führungsbereich begrenzen, der für die Aufnahme zumindest eines Führungsmittels ausgebildet ist.

7. Spannfutter nach einem der vorhergehenden Ansprüche, **dadurch gekennzeichnet, dass** die Führungseinrichtung (24) aus zumindest zwei, vorzugsweise im wesentlichen gleichartig geformten, Führungsteilen (26) gebildet ist, die vorzugsweise durch Verbindungsmittel (52) miteinander gekoppelt sind.

8. Spannfutter nach Anspruch 7, **dadurch gekennzeichnet, dass** die Führungsteile (26) spiegelbildlich zu einer Symmetrieebene, insbesondere spiegelbildlich zu einer Radialebene des Futterkörpers (12), ausgebildet und/oder angeordnet sind.

9. Spannfutter nach einem der vorhergehenden Ansprüche, **dadurch gekennzeichnet, dass** der Spannhalter (34) zum Festlegen eines Werkstücks mit einer Betätigungseinrichtung gekoppelt ist, die für eine Einleitung von radial nach innen gerichteten Betätigungskräften auf den Spannhalter (34) ausgebildet ist.

10. Spannfutter nach Anspruch 9, **dadurch gekennzeichnet, dass** die Betätigungseinrichtung für eine Ansteuerung des Spannhalters (34) mittels eines vorzugsweise parallel zu einer Maschinenspindelachse verstellbaren Betätigungsglieds ausgebildet ist, insbesondere eines Getriebes wie eines Keilhakengetriebes, Hebelgetriebes oder Keilstangengetriebes.

11. Spannfutter nach einem der vorhergehenden Ansprüche, **dadurch gekennzeichnet, dass** der Spannhalter (34') mittels einer Wälzführung (60', 62') in der Führungseinrichtung (24') bzw. den Führungsteilen (26') gelagert ist, wobei vorzugsweise die Wälzkörper der Wälzführung Zylinderrollen (62') sind.

12. Spannfutter nach Anspruch 11, **dadurch gekennzeichnet, dass** die Wälzkörper (62') eine Wälzführung bilden derart, dass der Spannhalter (34') ausschließlich entlang einer Längsrichtung der Wälzführung (60', 62') bewegbar ist, wobei vorzugsweise Führungsflächen (60') für die Wälzkörper (62') schräg stehen zu einer Mittelachse (16) des Spannfutters (10') und vorzugsweise an den Führungsteilen (26') vorgesehen sind.

13. Verfahren zur Herstellung eines Spannfutters (10), insbesondere eines Spannfutters nach einem der vorhergehenden Ansprüche, mit den Schritten:
- Aufnehmen von Führungsteilen (26) an einem Ausrichtmittel,
- Anbringen und Festlegen des Ausrichtmittels am dem Futterkörper (12) unter Verwendung zumindest einer am Futterkörper (12) vorgesehenen, zum Ausrichtmittel korrespondierenden Ausrichtgeometrie,
- wobei beim Anbringen des Ausrichtmittels an dem Futterkörper (12) die Führungsteile (26) in Ausnehmungen (20) des Futterkörpers (12) eingesetzt werden,
- stoffschlüssiges Verbinden der Führungsteile (26) mit dem Futterkörper (12),
**dadurch gekennzeichnet, dass** zur stoffschlüssigen Verbindung eines Führungsteils (26) mit dem Futterkörper (12) zumindest ein von dem Führungsteil (26) und dem Futterkörper (12) begrenzter Zwischenraum (40) mit einem aushärtbaren flüssigen oder pastösen Werkstoff (46) ausgefüllt wird.

14. Verfahren nach Anspruch 13, **dadurch gekennzeichnet, dass** die Führungsteile (26) zumindest während des stoffschlüssigen Verbindens miteinander gekoppelt sind, vorzugsweise durch Verbindungsmittel (52).

## Claims

1. A chuck (10) with a chuck body (12), said chuck body being provided with at least one guide device (24), wherein on said guide device is received at least one preferably in a radial direction movable clamping holder (34) for fixing a workpiece to said chuck body (12), **characterized in that** the guide device (24) is provided as a separate part from said chuck body (12), **characterized in that** the guide device (24) is fixed integrally to said chuck body (12) by means of a filling material (46) that differs from the chuck body (12).

2. The chuck according to claim 1, **characterized in that** a gap (40) is provided on said chuck, said gap being at least substantially bordered by said guide device (24) and a recess (20) provided in the chuck body (12), wherein said gap is at least partly filled with a hardenable filling material (46), in particular by polymer concrete or cast mineral.

3. The chuck according to claim 2, **characterized in that** the guide device (24) and the recess (20) in the chuck body (12) are so matched to one another that on fixing a workpiece, said filling material (46) is at least preponderantly subject to a compressive force.

4. The chuck according to claim 2 or 3, **characterized in that** the recess (20) and the guide device (24) have matched projections (28, 30) and/or recesses being constructed for a transfer of said compressive forces between said chuck body (12) and said guide device (24) via said filling material (46).

5. The chuck according to any of the claims 2 through 4, **characterized in that** the recess (20) has a profiling, said profiling having a longitudinally cross-section being at least substantially constant, in particular said profiling is undercut, and preferably a profiling axis (22) is oriented at least substantially in a radial direction of said chuck (10).

6. The chuck according to any of the preceding claims, **characterized in that** the guide device (24) and the clamping holder (34) bound at least one guide area of said chuck, preferably said guide area extends parallel to a radial direction and is constructed for receiving at least one guide means.

7. The chuck according to any of the preceding claims, **characterized in that** the guide device (24) is formed from at least two, preferably substantially identically shaped guide parts (26), said guide parts preferably being coupled together by joining means (52).

8. The chuck according to claim 7, **characterized in that** the guide parts (26) are constructed and/or arranged in homologous manner to a plane of symmetry and homologously to a radial plane of chuck body (12).

9. The chuck according to any of the preceding claims, **characterized in that** said clamping holder (34) for fixing said workpiece is coupled to an operating device, said operating device being constructed for introducing radially inwardly directed operating forces onto said clamping holder (34).

10. The chuck according to claim 9, **characterized in that** said operating device is constructed for controlling said clamping holder (34) by means of an operating member adjustable parallel to a machine spindle axis, in particular a gearing, such as a wedge hook gear, lever gear or wedge rod gear.

11. The chuck according to any of the preceding claims, **characterized in that** said clamping holder (34') is mounted by means of a rolling guide (60', 62') in said guide device (24') or the guide parts (26), respectively, preferably in said rolling guide cylindrical rollers (62') are provided as rolling members.

12. The chuck according to claim 11, **characterized in that** said rolling members (62') form a rolling guide in such a way that said clamping holder (34') is exclusively movable along a longitudinal direction of said rolling guide (60', 62'), preferably guide faces (60') for said rolling members (62') are inclined to a centre axis (16) of said chuck (10') and preferably are provided on said guide parts (26').

13. A method for the manufacture of a chuck (10), in particular a chuck according to any of the preceding claims, said method having the steps of:
- receiving said guide parts (26) on an orienting means,
- fitting and fixing said orienting means to said chuck body (12) using at least one orientation geometry corresponding to said orienting means and provided on said chuck body (12),
- where on fitting said orienting means to said chuck body (12) said guide parts (26) are inserted in recesses (20) of said chuck body (12),
- integral joining of the guide parts (26) to said chuck body (12),
**characterized in that** for said integral joining of one guide part (26) to said chuck body (12), at least one gap (40) bordered by said guide part (26) and said chuck body (12) is filled with a hardenable liquid or pasty material (46).

14. The method according to claim 13, **characterized in that** said guide parts (26) are coupled together by joining means (52), at least during said integral joining.

## Revendications

1. Mandrin de serrage (10) avec un corps de mandrin (12), qui est muni d'au moins un moyen de guidage (24), sur lequel est logé au moins un support de serrage (34) susceptible d'être déplacé de préférence en direction radiale pour la fixation d'une pièce d'oeuvre au corps de mandrin (12),
**caractérisé en ce que** le moyen de guidage (24) est réalisé de manière à être distinct du corps de mandrin (21), **caractérisé en ce que** le moyen de guidage (24) est fixé au corps de mandrin (12) à engagement par liaison de matière par un matériau de remplissage (46) différent du corps de mandrin (12).

2. Mandrin de serrage d'après la revendication 1, **caractérisé en ce qu'**un interstice (40) délimité au moins essentiellement par le moyen de guidage (24) et un creux (20) prévu dans le corps de mandrin (12), est rempli au moins en partie d'un matériau de remplissage (46) durcissable, notamment d'un béton au polymère ou encore d'une fonte minérale.

3. Mandrin de serrage d'après la revendication 2, **caractérisé en ce que** le moyen de guidage (24) et le creux (20) dans le corps de mandrin (12) sont adaptés l'un par rapport à l'autre de manière que le matériau de remplissage (46) est soumis au moins de façon prépondérante à un effort de pression quand une pièce d'oeuvre est fixée.

4. Mandrin de serrage d'après la revendication 2 ou 3, **caractérisé en ce que** le creux (20) et le moyen de guidage (24) présentent des saillies (28, 30) adaptées les unes aux autres et/ou des creux, qui sont réalisés pour une transmission de forces de pression entre le corps de mandrin (12) et le moyen de guidage (24) par l'intermédiaire du matériau de remplissage (46).

5. Mandrin de serrage d'après une des revendications de 2 à 4, **caractérisé en ce que** le creux (20) présente un profilage avec une section transversale au moins essentiellement constante en direction longitudinale, notamment en contre-dépouille, sachant que de préférence un axe de profil (22) est orienté au moins fondamentalement en direction radiale du mandrin de serrage (10).

6. Mandrin de serrage d'après une des revendications précédentes,
**caractérisé en ce que** le moyen de guidage (24) et le support de serrage (34) délimitent au moins un domaine de guidage, s'étendant de préférence parallèlement à une direction radiale, qui est réalisé pour le logement d'au moins un moyen de guidage.

7. Mandrin de serrage d'après une des revendications précédentes,
**caractérisé en ce que** le moyen de guidage (24) est constitué au moins de deux éléments de guidage (26) présentant des formes essentiellement similaires, qui sont couplés l'un à l'autre par l'intermédiaire de moyens de raccordement (52).

8. Mandrin de serrage d'après la revendication 7, **caractérisé en ce que** les éléments de guidage (26) sont réalisés et/ou disposés en miroir par rapport à un plan de symétrie, notamment en miroir par rapport à un plan radial du corps de mandrin (12).

9. Mandrin de serrage d'après une des revendications précédentes,
**caractérisé en ce que** pour la fixation d'une pièce d'oeuvre, le support de serrage (34) est couplé avec un moyen d'actionnement, qui est réalisé pour appliquer des forces d'actionnement orientées radialement vers l'intérieur sur le support de serrage (34).

10. Mandrin de serrage d'après la revendication 9, **caractérisé en ce que** le moyen d'actionnement est réalisé pour la commande du support de serrage (34) par l'intermédiaire d'un élément d'actionnement, qui est susceptible d'être déplacé de préférence parallèlement à un axe d'arbre de machine et notamment d'une liaison mécanique tel qu'un mécanisme du genre *wedge hook* (*Keilhakengetriebe*), un mécanisme à levier, ou un mécanisme à crémaillère tangentielle.

11. Mandrin de serrage d'après une des revendications précédentes,
**caractérisé en ce que** le support de serrage (34') est logé dans le moyen de guidage (24') ou encore dans les éléments de guidage (26') par l'intermédiaire d'un guidage à rouleaux (60', 62'), sachant que de préférence les organes de roulement du guidage à rouleaux sont des rouleaux cylindriques (62').

12. Mandrin de serrage d'après la revendication 11, **caractérisé en ce que** les organes de roulement (62') forment un guidage à rouleaux de manière que le support de serrage (34') soit déplaçable uniquement le long d'une direction longitudinale du guidage à rouleaux (60', 62'), sachant que de préférence des surfaces de guidage (60') pour les organes de roulement (62') se trouvent en position oblique par rapport à un axe central (16) du mandrin de serrage (10') et de préférence elles sont prévues sur les éléments de guidage (26').

13. Procédé de fabrication d'un mandrin de serrage (10), notamment d'un mandrin de serrage d'après une des revendications précédentes, comportant les étapes suivantes:
- Logement d'éléments de guidage (26) sur un moyen d'ajustage,
- Placement et fixation du moyen d'ajustage sur le corps de mandrin (12) en utilisant au moins une géométrie d'ajustage prévue sur le corps de mandrin (12) et correspondant au moyen d'ajustage,
- sachant que quand le moyen d'ajustage est placé sur le corps de mandrin (12), les éléments de guidage (26) sont insérés dans des creux (20) du corps de mandrin (12),
- Raccordement à engagement par liaison de matière des éléments de guidage (26) au corps de mandrin (12),
**caractérisé en ce que** pour un raccord à engagement par liaison de matière d'un élément de guidage (26) au corps de mandrin (12) au moins un interstice (40) délimité par l'élément de guidage (26) et le corps de mandrin (12) est rempli d'un matériau (46) durcissable liquide ou pâteux.

14. Procédé d'après la revendication 13, **caractérisé en ce que** les éléments de guidage (26) sont couplés entre eux au moins pendant le raccordement à engagement par liaison de matière, de préférence par des moyens de raccordement (52).
